(19) Europäisches Patentamt
European Patent Office
Office européen des brevets

(11) **EP 2 652 854 B1**

(12) **EUROPÄISCHE PATENTSCHRIFT**

(45) Veröffentlichungstag und Bekanntmachung des Hinweises auf die Patenterteilung:
**11.07.2018   Patentblatt 2018/28**

(21) Anmeldenummer: **10795348.1**

(22) Anmeldetag: **17.12.2010**

(51) Int Cl.:
***H02J 1/14*** *(2006.01)*

(86) Internationale Anmeldenummer:
**PCT/EP2010/070068**

(87) Internationale Veröffentlichungsnummer:
**WO 2012/079645 (21.06.2012 Gazette 2012/25)**

(54) **ENERGIEÜBERTRAGUNGSSYSTEM**

POWER TRANSMISSION SYSTEM

SYSTÈME DE TRANSFERT D'ÉNERGIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**23.10.2013   Patentblatt 2013/43**

(73) Patentinhaber: **Siemens Aktiengesellschaft 80333 München (DE)**

(72) Erfinder: **APEL, Rolf 90461 Nürnberg (DE)**

(56) Entgegenhaltungen:
**WO-A1-2009/104166     US-A- 4 694 192**

**Beschreibung**

Die Erfindung bezieht sich auf ein Energieübertragungssystem, dabei insbesondere auf die Verteilungsebene, mit zumindest zwei lokalen Leitungsnetzen, die jeweils mit Verbrauchern verbunden sind und mit einem übergeordneten Energieübertragungsnetz in Verbindung stehen. Bekanntermaßen werden lokale Leitungsnetze jeweils an eine Ortsnetzstation angeschlossen und über diese mit dem übergeordneten Energieübertragungsnetz verbunden.

Auch ist es bekannt, Großverbraucher bei der Simulation von Energieübertragungssystemen zu berücksichtigen und für die Ermittlung der optimalen Energiefluss- und Kraftwerksteuerung einzubeziehen. Dies ermöglicht es unter anderem beispielsweise, einzelne Großverbraucher abzustellen oder in ihrem Verbrauch zu reduzieren, wenn die Simulation des Energieübertragungssystems ergibt, dass die Energieerzeuger nicht genügend Strom produzieren können oder aber eine Erhöhung der Energieproduktion nachteilig wäre. Das Dokument WO2009/104166 zeigt ein Energieübertragungssystem gemäss dem Obenbegriff des Anspruchs 1. Eine Simulation von Energieübertragungssystemen und eine aktive Laststeuerung der Verbraucher erfordert bei einer hohen Anzahl an Energieerzeugern und Energieverbrauchern jedoch erheblichen Simulations- und Rechenaufwand. Trotzdem lässt es sich nicht immer vermeiden, dass es zu einer Überlastung lokaler Leitungsnetze kommt.

Der Erfindung liegt daher die Aufgabe zugrunde, ein Energieübertragungssystem anzugeben, das eine noch bessere Steuerbarkeit als vorbekannte Energieübertragungssysteme aufweist.

Diese Aufgabe wird erfindungsgemäß durch ein Energieübertragungssystem mit den Merkmalen gemäß Patentanspruch 1 gelöst. Vorteilhafte Ausgestaltungen des erfindungsgemäßen Energieübertragungssystems sind in Unteransprüchen angegeben.

Danach ist erfindungsgemäß vorgesehen, dass das Energieübertragungssystem mindestens eine Laststeuereinrichtung aufweist, die mit mindestens jeweils einem Verbraucher der zumindest zwei lokalen Leitungsnetze mittelbar oder unmittelbar verbunden und geeignet ist, den Verbrauch dieser Verbraucher zu steuern, und die Laststeuereinrichtung außerdem geeignet ist, den Lastzustand der zumindest zwei lokalen Leitungsnetze auszuwerten und im Falle einer aufgetretenen oder bevorstehenden Überlastung eines der zumindest zwei lokalen Leitungsnetze mindestens einen Verbraucher dieses lokalen Leitungsnetzes in seinem Verbrauch zu reduzieren und im Gegenzug den Verbrauch mindestens eines Verbrauchers in einem der übrigen nicht überlasteten lokalen Leitungsnetze der zumindest zwei lokalen Leitungsnetze zu erhöhen.

Ein wesentlicher Vorteil des erfindungsgemäßen Energieübertragungssystems besteht darin, dass mit der erfindungsgemäß vorgesehenen Laststeuereinrichtung eine Umschichtung bzw. Verschiebung des Energieverbrauchs leitungsnetzübergreifend möglich ist. Ist ein lokales Leitungsnetz überlastet und muss dort der Energieverbrauch gesenkt werden, so kann die Laststeuereinrichtung den Energieverbrauch anderswo erhöhen und somit eine Rückwirkung auf das übergeordnete Energieübertragungsnetz und die Energieerzeugung vermeiden oder zumindest reduzieren. Mit anderen Worten kann die erfindungsgemäß vorgesehene Laststeuereinrichtung den Lastfluss zwischen bzw. unter den zugeordneten lokalen Leitungsnetzen verschieben, dynamische Laständerungen aktiv kompensieren und für das übergeordnete Energieübertragungsnetz und übergeordnete Leiteinrichtungen einen quasistatischen Zustand erreichen, obwohl in der Ebene der lokalen Leitungsnetze lokale Netzüberlastungen auftreten oder bevorstehen, also der Netzzustand relativ dynamisch ist.

Ein weiterer Vorteil des erfindungsgemäßen Energieübertragungssystems besteht darin, dass durch die aktive Energieflussverschiebung in der lokalen Leitungsnetzebene eine erhebliche Reduktion der Schwankungen des Systemzustandes und damit eine erhebliche Reduktion des Simulations- und Rechenaufwands bei der Simulation des gesamten Energieübertragungssystems erzielt werden.

Vorzugsweise sind die zumindest zwei lokalen Leitungsnetze jeweils an eine Ortsnetzstation angeschlossen, die das zugeordnete lokale Leitungsnetz an das übergeordnete Energieübertragungsnetz anschließt. Die lokalen Leitungsnetze stehen damit nur mittelbar, nämlich über die Ortsnetzstationen, mit dem übergeordneten Energieübertragungsnetz in Verbindung.

Die Laststeuereinrichtung steht vorzugsweise mittelbar oder unmittelbar mit den Ortsnetzstationen der zumindest zwei lokalen Leitungsnetze in Verbindung. Beispielsweise kann die Laststeuereinrichtung Steuersignale zum Steuern des Verbrauchs der Verbraucher mittelbar über die jeweilige Ortsnetzstation zu dem jeweiligen Verbraucher senden. Auch kann die Laststeuereinrichtung Lastdaten der Verbraucher mittelbar über die jeweilige Ortsnetzstation erhalten.

Alternativ kann die Laststeuereinrichtung Steuersignale zum Steuern des Verbrauchs der Verbraucher unmittelbar ohne Vermittlung der jeweiligen Ortsnetzstation zu dem jeweiligen Verbraucher senden.

Die Erfindung betrifft darüber hinaus eine Laststeuereinrichtung für ein Energieübertragungssystem. Erfindungsgemäß ist diesbezüglich vorgesehen, dass die Laststeuereinrichtung geeignet ist, mit mindestens jeweils einem Verbraucher zumindest zweier, vorzugsweise separater, lokaler Leitungsnetze mittelbar oder unmittelbar verbunden zu werden und den Verbrauch dieser Verbraucher zu steuern, und die Laststeuereinrichtung außerdem geeignet ist, den Lastzustand der zumindest zwei lokalen Leitungsnetze auszuwerten und im Falle einer aufgetretenen oder bevorstehenden Überlastung eines der zumindest zwei lokalen Leitungsnetze mindestens einen Verbraucher dieses lokalen Leitungsnetzes in seinem Verbrauch zu reduzieren und im Gegenzug den Verbrauch mindestens eines Verbrauchers in einem der übrigen nicht überlasteten lokalen Leitungsnetze der zumindest zwei lokalen Leitungsnetze zu erhöhen.

Bezüglich der Vorteile der erfindungsgemäßen Laststeuereinrichtung sei auf die obigen Ausführungen im Zusammenhang mit dem erfindungsgemäßen Energieübertragungssystem verwiesen, da die Vorteile der erfindungsgemäßen Laststeuereinrichtung denen des erfindungsgemäßen Energieübertragungssystems im Wesentlichen entsprechen.

Die Laststeuereinrichtung weist vorzugsweise eine programmierbare Datenverarbeitungseinrichtung, beispielsweise mit einem oder mehreren Mikroprozessoren auf, die derart programmiert ist, dass sie die obigen Schritte zum Steuern des Lastflusses in Abhängigkeit von Lastdaten durchführen kann. Vorzugsweise weist die Laststeuereinrichtung auch einen Speicher auf, in dem das Programm zum Durchführen der Arbeitsschritte abgespeichert werden kann.

Die Erfindung bezieht sich darüber hinaus auf ein Verfahren zum Steuern eines Energieübertragungssystems mit Ortsnetzstationen, die einerseits an ein übergeordnetes Energieübertragungsnetz angeschlossen sind und andererseits jeweils über ein zugeordnetes lokales Leitungsnetz mit Verbrauchern verbunden sind.

Erfindungsgemäß ist vorgesehen, dass der Lastzustand zumindest zweier lokaler Leitungsnetze ausgewertet und im Falle einer aufgetretenen oder bevorstehenden Überlastung eines der zumindest zwei lokalen Leitungsnetze mindestens ein Verbraucher dieses lokalen Leitungsnetzes in seinem Verbrauch reduziert und im Gegenzug der Verbrauch mindestens eines Verbrauchers in einer der übrigen nicht überlasteten lokalen Leitungsnetze der zumindest zwei lokalen Leitungsnetze erhöht wird.

Bezüglich der Vorteile des erfindungsgemäßen Verfahrens sei auf die obigen Ausführungen im Zusammenhang mit dem erfindungsgemäßen Energieübertragungssystem und der erfindungsgemäßen Laststeuereinrichtung verwiesen, da die Vorteile des erfindungsgemäßen Verfahrens denen der erfindungsgemäßen Einrichtungen entsprechen.

Gemäß einer bevorzugten Ausgestaltung des Verfahrens ist vorgesehen, dass eine Laststeuereinrichtung, die mittelbar oder unmittelbar mit den Ortsnetzstationen der zumindest zwei lokalen Leitungsnetze in Verbindung steht, den Lastzustand der zumindest zwei lokalen Leitungsnetze auswertet und im Falle einer aufgetretenen oder bevorstehenden Überlastung eines der zumindest zwei lokalen Leitungsnetze mindestens einen Verbraucher dieses lokalen Leitungsnetzes in seinem Verbrauch reduziert und im Gegenzug den Verbrauch mindestens eines Verbrauchers in einer der übrigen nicht überlasteten lokalen Leitungsnetze der zumindest zwei lokalen Leitungsnetze erhöht.

Die Laststeuereinrichtung kann Steuersignale zum Steuern des Verbrauchs der Verbraucher mittelbar über die jeweilige Ortsnetzstation zu dem jeweiligen Verbraucher senden. Alternativ oder zusätzlich kann die Laststeuereinrichtung Steuersignale zum Steuern des Verbrauchs der Verbraucher unmittelbar ohne Vermittlung der jeweiligen Ortsnetzstation zu dem jeweiligen Verbraucher senden.

Die Erfindung wird nachfolgend anhand von Ausführungsbeispielen näher erläutert, dabei zeigen beispielhaft

Figuren 1-3    ein erstes Ausführungsbeispiel für ein erfindungsgemäßes Energieübertragungssystem, anhand dessen auch das erfindungsgemäße Verfahren beispielhaft erläutert wird,

Figur 4    ein zweites Ausführungsbeispiel für ein erfindungsgemäßes Energieübertragungssystem,

Figur 5    ein drittes Ausführungsbeispiel für ein erfindungsgemäßes Energieübertragungssystem,

Figur 6    ein viertes Ausführungsbeispiel für ein erfindungsgemäßes Energieübertragungssystem und

Figur 7    ein fünftes Ausführungsbeispiel für ein erfindungsgemäßes Energieübertragungssystem.

In den Figuren werden aus Gründen der Übersichtlichkeit für identische oder vergleichbare Komponenten dieselben Bezugszeichen verwendet.

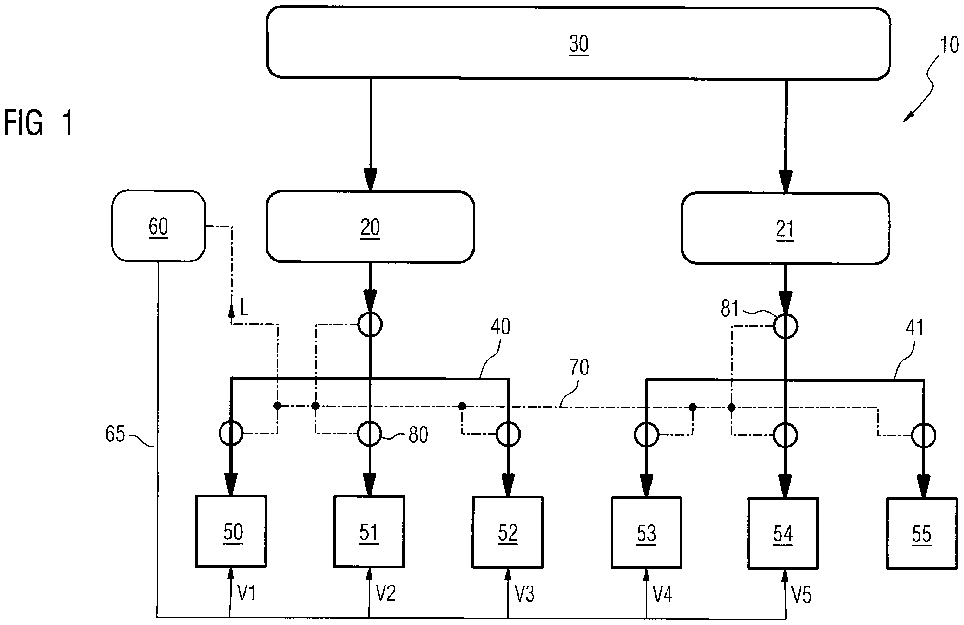

In der Figur 1 erkennt man ein erstes Ausführungsbeispiel für ein Energieübertragungssystem 10 mit zwei Ortsnetzstationen 20 und 21, die an ein übergeordnetes Energieübertragungsnetz 30 angeschlossen sind. Die zwei Ortsnetzstationen 20 und 21 stehen außerdem jeweils mit einem zugeordneten lokalen Leitungsnetz 40 und 41 in Verbindung, an das Verbraucher 50 bis 55 angeschlossen sind. Die Verbraucher 50 bis 52 stehen bei diesem Ausführungsbeispiel mit dem in der Figur 1 linken lokalen Leitungsnetz 40 und die Verbraucher 53 bis 55 mit dem in der Figur 1 rechten lokalen Leitungsnetz 41 in Verbindung. Die Verbraucher 50 bis 54 sind bei dem Ausführungsbeispiel gemäß der Figur 1 steuerbar, der Verbraucher 55 ist im Unterschied dazu nicht steuerbar.

Bei den beiden lokalen Leitungsnetzen 40 und 41 handelt es sich beispielsweise um separate bzw. voneinander getrennte Netze. Der Energiefluss von dem übergeordneten Energieübertragungsnetz 30 zu den Verbrauchern 50 bis 55 ist in der Figur 1 durch Pfeile mit dicker Linienstärke markiert.

Die Figur 1 zeigt außerdem eine Laststeuereinrichtung 60, die mit den Verbrauchern 50 bis 52 des lokalen Leitungsnetzes 40 und mit den Verbrauchern 53 und 54 des lokalen Leitungsnetzes 41 verbunden ist. Die Laststeuereinrichtung 60 dient dazu, den Verbrauch der steuerbaren Verbraucher 50 bis 54 über Steuerverbindungen 65 zu steuern, wie weiter unten noch näher im Detail erläutert werden wird. Zur Steuerung der Verbraucher 50 bis 54 erzeugt die Laststeuereinrichtung 60 individuelle Laststeuersignale V1 bis V5, die den Sollverbrauch für den jeweiligen Verbraucher festlegen.

Die Laststeuereinrichtung 60 steht über Datenverbindungen 70 mittelbar oder unmittelbar mit einer Vielzahl an Sensoren in Verbindung, die in den zwei lokalen Leitungsnetzen 40 und 41 angeordnet sind und von denen beispielhaft zwei in der Figur 1 mit den Bezugszeichen 80 und 81 gekennzeichnet sind. Alternativ oder zusätzlich können Sensoren innerhalb der Ortsnetzstationen 20 und 21 angeordnet sein. Die von den Sensoren gelieferten Lastdaten L, bei denen es sich beispielsweise um Strom-, Spannungs-, Wirkleistungs-, Blindleistungs- oder andere Messwerte handeln kann, beschreiben den Lastzustand der zwei lokalen Leitungsnetze 40 und 41.

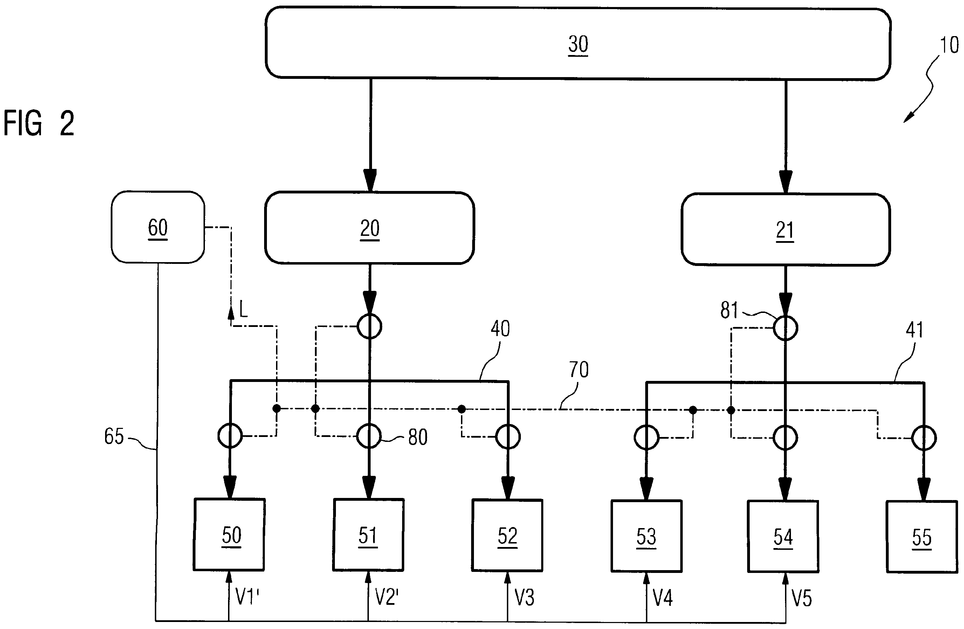

Die Anordnung gemäß der Figur 1 kann beispielsweise wie folgt betrieben werden:
Die Laststeuereinrichtung 60 ermittelt mit den eingangsseitig anliegenden Lastdaten L für jedes der beiden lokalen Leitungsnetze 40 und 41 den jeweiligen Lastzustand und wertet den Lastzustand aus. Im Falle einer aufgetretenen oder bevorstehenden Überlastung eines der zumindest zwei lokalen Leitungsnetze wird die Laststeuereinrichtung 60 mindestens einen Verbraucher dieses lokalen Leitungsnetzes in seinem Verbrauch reduzieren und im Gegenzug den Verbrauch mindestens eines Verbrauchers in einem der übrigen nicht überlasteten lokalen Leitungsnetze erhöhen. Dies soll anhand eines Beispiels näher erläutert werden:
Stellt die Laststeuereinrichtung 60 beispielsweise fest, dass das lokale Leitungsnetz 40 überlastet ist, so wird sie den Verbrauch eines oder mehrerer der steuerbaren Verbraucher, beispielsweise den der Verbraucher 50 und 51, um jeweils einen Energiebetrag $\Delta E1$ bzw. $\Delta E2$ ($\Delta E1 + \Delta E2 < 0$) reduzieren, indem sie diesen Verbrauchern 50 und 51 modifizierte Laststeuersignale V1'=f($\Delta E1$) und V2'=f($\Delta E2$) übermittelt (vgl. Figur 2).

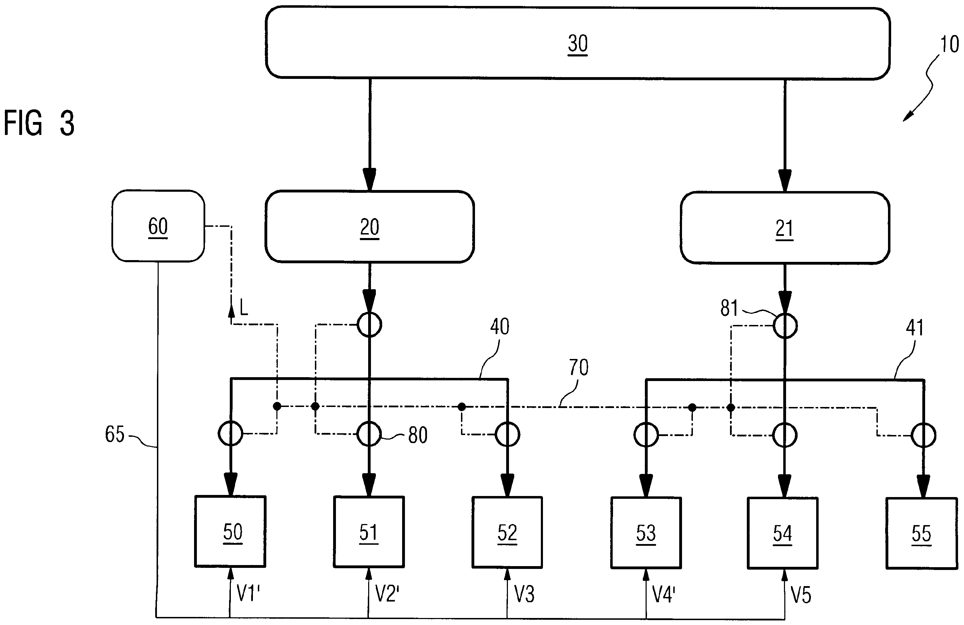

Um zu erreichen, dass die Verbrauchsreduktion keine Rückwirkung auf das Energieübertragungsnetz 30 und damit mittelbar auf die Energieerzeugung hat, wird die Laststeuereinrichtung 60 den Energieverbrauch in dem lokalen Leitungsnetz 41 erhöhen, sofern dieses nicht ebenfalls überlastet ist, indem sie beispielsweise den Verbrauch des Verbrauchers 53 um einen Energiebetrag $\Delta E4$ ($\Delta E4 > 0$) steigert; dies kann die Laststeuereinrichtung 60 beispielsweise mit einem modifizierten Laststeuersignal V4'=f($\Delta E4$) erreichen, das dem Verbraucher 53 eine Verbrauchserhöhung signalisiert (vgl. Figur 3).

Die modifizierten Laststeuersignale V1', V2' und V4' werden von der Laststeuereinrichtung 60 vorzugsweise derart gewählt, dass unter Berücksichtigung der Vorzeichen gilt:

$$\Delta E1 + \Delta E2 + \Delta E4 = 0$$

Bei dem Ausführungsbeispiel gemäß den Figuren 1 bis 3 ist die Laststeuereinrichtung 60 über die Steuerverbindungen 65 unmittelbar mit den Verbrauchern 50 bis 54 verbunden, so dass die Steuerung mittels der Laststeuersignale V1 bis V5 unmittelbar erfolgen kann.

Die Steuerverbindungen 65 können durch elektrische oder optische Leitungen oder auch durch Funkverbindungen gebildet werden. Zur Bildung der Steuerverbindungen 65 können das Telekommunikationsnetz, das Internet, Mobilfunknetz oder andere Kommunikationsdienste genutzt werden. Auch können die Steuerverbindungen 65 auf elektrischen Steuersignalen basieren, die über das jeweilige lokale Leitungsnetz 40 oder 41 übertragen werden.

Entsprechendes gilt für die Datenverbindungen 70: Auch die Datenverbindungen 70 können durch elektrische oder optische Leitungen oder auch durch Funkverbindungen gebildet werden. Zur Bildung der Datenverbindungen 70 können das Telekommunikationsnetz, das Internet, Mobilfunknetz oder andere Kommunikationsdienste genutzt werden. Auch können die Datenverbindungen 70 auf elektrischen Steuersignalen basieren, die über das jeweilige lokale Leitungsnetz 40 oder 41 übertragen werden.

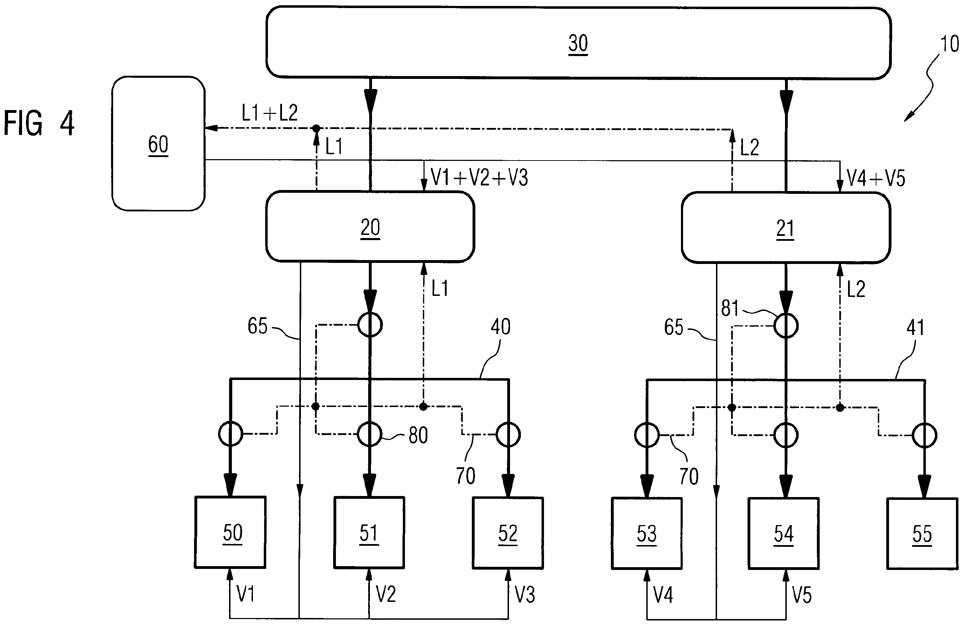

Die Figur 4 zeigt ein zweites Ausführungsbeispiel für ein Energieübertragungssystem 10. Bei diesem Ausführungsbeispiel ist die Laststeuereinrichtung 60 mit den beiden Ortsnetzstationen 20 und 21 verbunden und steht mit den Verbrauchern 50 bis 54 nur mittelbar über die Ortsnetzstationen in Verbindung. Die von den Sensoren gelieferten Lastdaten L1 und L2 werden mittelbar über die jeweiligen Ortsnetzstationen 20 und 21 zur Laststeuereinrichtung 60 übermittelt.

Die Laststeuereinrichtung 60 wertet die von den Sensoren gelieferten Lastdaten L1 und L2 aus und erzeugt Laststeuersignale V1 bis V5, wie dies im Zusammenhang mit den Figuren 1 bis 3 erläutert worden ist. Die Laststeuersignale V1 bis V5 werden über die Ortsnetzstationen 20 und 21 zu den jeweiligen Verbrauchern übermittelt.

Die Steuerverbindungen 65 zum Übertragen der Laststeuersignale V1 bis V5 können auch bei diesem Ausführungsbeispiel durch elektrische oder optische Leitungen oder auch durch Funkverbindungen gebildet werden. Zur Bildung der Steuerverbindungen 65 können das Telekommunikationsnetz, das Internet, Mobilfunknetz oder andere Kommunikationsdienste genutzt werden. Auch können die Steuerverbindungen 65 auf elektrischen Steuersignalen basieren, die über das jeweilige lokale Leitungsnetz 40 oder 41 übertragen werden.

Entsprechendes gilt für die Datenverbindungen 70: Auch bei diesem Ausführungsbeispiel können die Datenverbindungen 70 durch elektrische oder optische Leitungen oder auch durch Funkverbindungen gebildet werden. Zur Bildung der Datenverbindungen 70 können das Telekommunikationsnetz, das Internet, Mobilfunknetz oder andere Kommunikationsdienste genutzt werden. Auch können die Datenverbindungen 70 auf elektrischen Steuersignalen basieren, die über das jeweilige lokale Leitungsnetz 40 oder 41 übertragen werden.

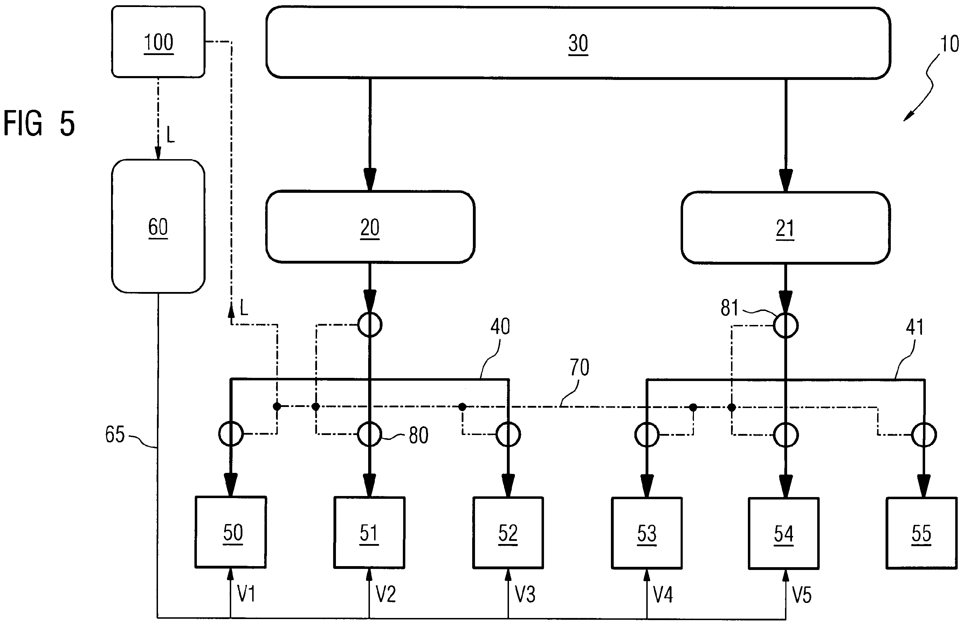

Die Figur 5 zeigt ein drittes Ausführungsbeispiel für ein Energieübertragungssystem 10. Bei diesem Ausführungsbeispiel ist die Laststeuereinrichtung 60 mit einer zentralen Leiteinrichtung 100 verbunden, von der sie die Lastdaten L der Sensoren oder aus diesen abgeleitete Lastdaten erhält. Die Laststeuereinrichtung 60 wertet die Lastdaten L bzw. die abgeleiteten Lastdaten aus und erzeugt die Laststeuersignale V1 bis V5, wie dies im Zusammenhang mit den Figuren 1 bis 3 erläutert worden ist. Die Laststeuersignale V1 bis V5 werden über die Steuerverbindungen 65 von der Laststeuereinrichtung 60 unmittelbar zu den Verbrauchern 50 bis 54 übermittelt.

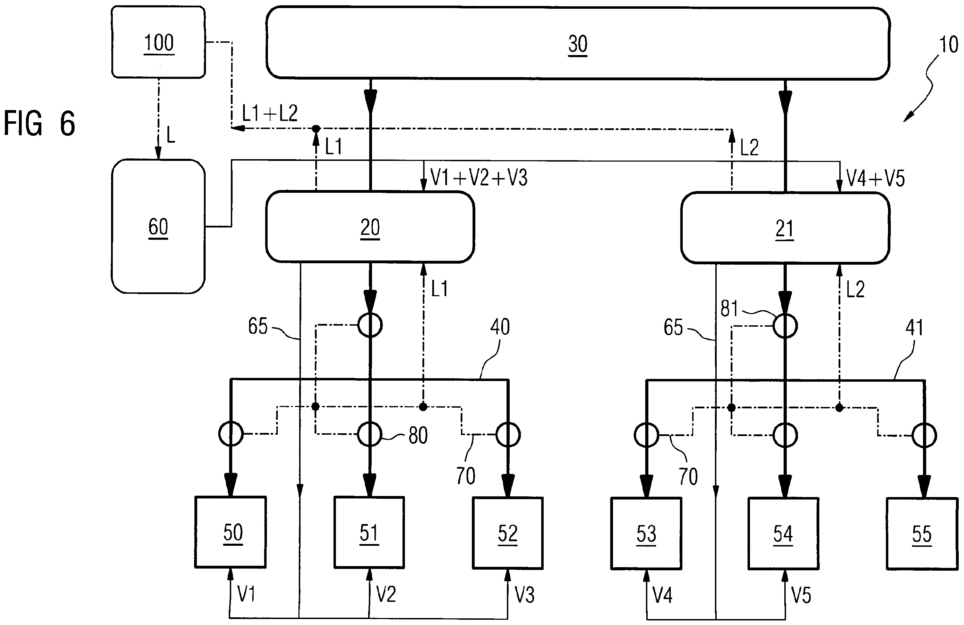

Die Figur 6 zeigt ein viertes Ausführungsbeispiel für ein Energieübertragungssystem 10. Bei diesem Ausführungsbeispiel ist die Laststeuereinrichtung 60 - wie bei dem Ausführungsbeispiel gemäß der Figur 5 - mit einer zentralen Leiteinrichtung 100 verbunden, von der sie die Lastdaten L der Sensoren oder aus diesen Lastdaten abgeleitete Lastdaten erhält. Die Laststeuereinrichtung 60 wertet die Lastdaten L oder die abgeleiteten Lastdaten aus und erzeugt die Laststeuersignale V1 bis V5, wie dies im Zusammenhang mit den Figuren 1 bis 3 erläutert worden ist.

Bei dem Ausführungsbeispiel gemäß der Figur 6 gelangen die Lastdaten L der Sensoren mittelbar über die Ortsnetzstationen 20 und 21 zu der zentralen Leiteinrichtung 100. Hierzu überträgt die Ortsnetzstation 20 die Lastdaten L1 der Sensoren, die zu dem lokalen Leitungsnetz 40 gehören, zu der zentralen Leiteinrichtung 100, und die Ortsnetzstation 21 überträgt die Lastdaten L2 der Sensoren, die zu dem lokalen Leitungsnetz 41 gehören, zu der zentralen Leiteinrichtung 100.

Die Laststeuereinrichtung 60 ist ebenfalls mit den beiden Ortsnetzstationen 20 und 21 verbunden und überträgt die Laststeuersignale V1 bis V5 mittelbar über die Ortsnetzstationen 20 und 21 zu den jeweiligen Verbrauchern.

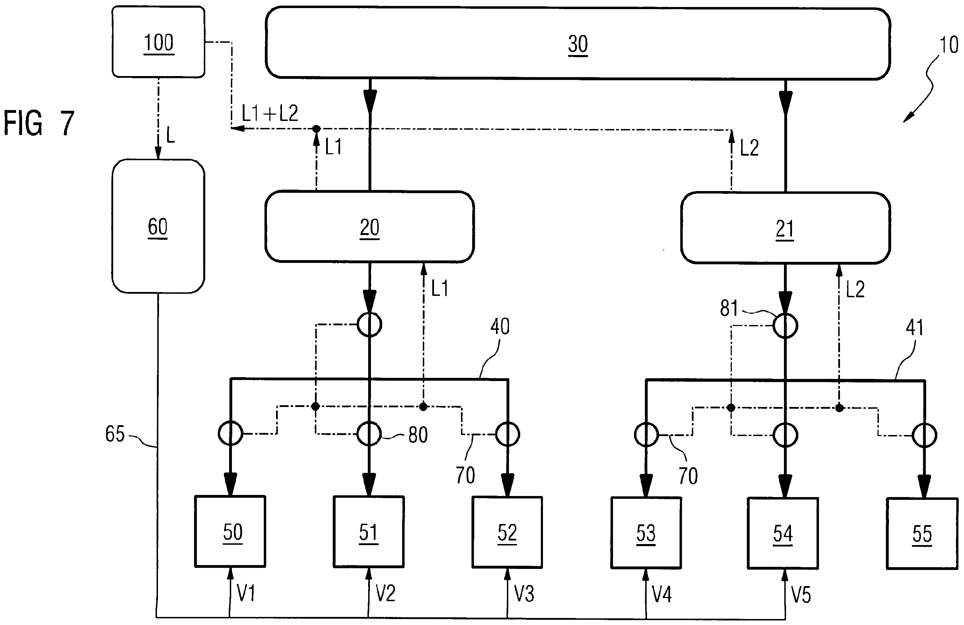

Die Figur 7 zeigt ein fünftes Ausführungsbeispiel für ein Energieübertragungssystem 10. Bei diesem fünften Ausführungsbeispiel erhält die zentrale Leiteinrichtung 100 die Lastdaten L1 und L2 der beiden lokalen Leitungsnetze 40 und 41 über die beiden Ortsnetzstationen 20 und 21. Die zentrale Leiteinrichtung 100 leitet die Lastdaten L, die sich aus den einzelnen Lastdaten L1 und L2 zusammensetzen, oder daraus abgeleitete Lastdaten zu der Laststeuereinrichtung 60. Die Laststeuereinrichtung 60 wertet diese aus und erzeugt die Laststeuersignale V1 bis V5, wie dies im Zusammenhang mit den Figuren 1 bis 3 erläutert worden ist. Die Laststeuersignale V1 bis V5 werden von der Laststeuereinrichtung 60 zu den Verbrauchern unmittelbar über die Steuerverbindungen 65 übertragen.

Bezugszeichenliste

| 10 | Energieübertragungssystem |
| 20 | Ortsnetzstation |
| 21 | Ortsnetzstation |
| 30 | Energieübertragungsnetz |
| 40 | lokales Leitungsnetz |
| 41 | lokales Leitungsnetz |
| 50-54 | steuerbarer Verbraucher |
| 55 | nicht steuerbarer Verbraucher |
| 60 | Laststeuereinrichtung |
| 65 | Steuerverbindungen |
| 70 | Datenverbindungen |
| 80 | Sensor |
| 81 | Sensor |
| 100 | zentrale Leiteinrichtung |
| | |
| L | Lastdaten |
| L1 | Lastdaten |
| L2 | Lastdaten |
| V1-V5 | Laststeuersignal |
| V1' | modifiziertes Laststeuersignal |
| V2' | modifiziertes Laststeuersignal |
| V4' | modifiziertes Laststeuersignal |

**Patentansprüche**

1. Energieübertragungssystem (10) mit zumindest zwei lokalen Leitungsnetzen (40, 41), die jeweils mit Verbrauchern (50-52, 53-55) verbunden sind und mit einem übergeordneten Energieübertragungsnetz (30) in Verbindung stehen,
   **dadurch gekennzeichnet, dass**

   - das Energieübertragungssystem (10) mindestens eine Laststeuereinrichtung (60) aufweist, die mit mindestens jeweils einem Verbraucher (50-54) der zumindest zwei lokalen Leitungsnetze (40, 41) mittelbar oder unmittelbar verbunden und geeignet ist, den Verbrauch dieser Verbraucher (50-54) zu steuern, und
   - die Laststeuereinrichtung (60) außerdem geeignet ist, den Lastzustand der zumindest zwei lokalen Leitungsnetze (40, 41) auszuwerten und im Falle einer aufgetretenen oder bevorstehenden Überlastung eines der zumindest zwei lokalen Leitungsnetze (40) mindestens einen Verbraucher (50, 51) dieses lokalen Leitungsnetzes (40) in seinem Verbrauch zu reduzieren und im Gegenzug den Verbrauch mindestens eines Verbrauchers (53) in einem der übrigen nicht überlasteten lokalen Leitungsnetze (41) der zumindest zwei lokalen Leitungsnetze zu erhöhen.

2. Energieübertragungssystem nach Anspruch 1, **dadurch gekennzeichnet, dass** die zumindest zwei lokalen Leitungsnetze (40, 41) jeweils an eine Ortsnetzstation (20, 21) angeschlossen sind, die das zugeordnete lokale Leitungsnetz (40, 41) an das übergeordnete Energieübertragungsnetz (30) anschließt.

3. Energieübertragungssystem nach Anspruch 1 oder 2, **dadurch gekennzeichnet, dass** die mindestens eine Laststeuereinrichtung (60) mittelbar oder unmittelbar mit den Ortsnetzstationen (20, 21) der zumindest zwei lokalen Leitungsnetze (40, 41) in Verbindung steht.

4. Energieübertragungssystem nach Anspruch 3, **dadurch gekennzeichnet, dass** die mindestens eine Laststeuereinrichtung (60) Steuersignale (V1-V5) zum Steuern des Verbrauchs der Verbraucher (50-54) mittelbar über die jeweilige Ortsnetzstation (20, 21) zu dem jeweiligen Verbraucher sendet.

5. Energieübertragungssystem nach einem der voranstehenden Ansprüche 1-3, **dadurch gekennzeichnet, dass** die mindestens eine Laststeuereinrichtung (60) Steuersignale (V1-V5) zum Steuern des Verbrauchs der Verbraucher (50-54) unmittelbar ohne Vermittlung der jeweiligen Ortsnetzstation (20, 21) zu dem jeweiligen Verbraucher sendet.

6. Laststeuereinrichtung für ein Energieübertragungssystem nach einem der voranstehenden Ansprüche, **dadurch gekennzeichnet, dass**

  - die Laststeuereinrichtung (60) geeignet ist, mit mindestens jeweils einem Verbraucher (50-54) zumindest zweier lokaler Leitungsnetze (40, 41) mittelbar oder unmittelbar verbunden zu werden und den Verbrauch dieser Verbraucher zu steuern, und
  - die Laststeuereinrichtung (60) außerdem geeignet ist, den Lastzustand der zumindest zwei lokalen Leitungsnetze (40, 41) auszuwerten und im Falle einer aufgetretenen oder bevorstehenden Überlastung eines der zumindest zwei lokalen Leitungsnetze (40) mindestens einen Verbraucher (50, 51) dieses lokalen Leitungsnetzes (40) in seinem Verbrauch zu reduzieren und im Gegenzug den Verbrauch mindestens eines Verbrauchers (53) in einem der übrigen nicht überlasteten lokalen Leitungsnetze (41) der zumindest zwei lokalen Leitungsnetze zu erhöhen.

7. Verfahren zum Steuern eines Energieübertragungssystems (10) mit Ortsnetzstationen (20, 21), die einerseits an ein übergeordnetes Energieübertragungsnetz (30) angeschlossen sind und andererseits jeweils über ein zugeordnetes lokales Leitungsnetz (40, 41) mit Verbrauchern (50-52, 53-55) verbunden sind, **dadur chgekennzeichnet,** dass der Lastzustand zumindest zweier lokaler Leitungsnetze (40, 41) ausgewertet und im Falle einer aufgetretenen oder bevorstehenden Überlastung eines der zumindest zwei lokalen Leitungsnetze (40, 41) mindestens ein Verbraucher (50, 51) dieses lokalen Leitungsnetze (40) in seinem Verbrauch reduziert und im Gegenzug der Verbrauch mindestens eines Verbrauchers (53) in einem der übrigen nicht überlasteten lokalen Leitungsnetze (41) der zumindest zwei lokalen Leitungsnetze erhöht wird.

8. Verfahren nach Anspruch 7, **dadurch gekennzeichnet, dass** eine Laststeuereinrichtung (60), die mittelbar oder unmittelbar mit den Ortsnetzstationen (20, 21) der zumindest zwei lokalen Leitungsnetze (40, 41) in Verbindung steht, den Lastzustand der zumindest zwei lokalen Leitungsnetze auswertet.

9. Verfahren nach Anspruch 8, **dadurch gekennzeichnet, dass** die Laststeuereinrichtung (60) Steuersignale (V1-V5) zum Steuern des Verbrauchs der Verbraucher (50-54) mittelbar über die jeweilige Ortsnetzstation (20, 21) zu dem jeweiligen Verbraucher sendet.

10. Verfahren nach Anspruch 8, **dadurch gekennzeichnet, dass** die Laststeuereinrichtung (60) Steuersignale (V1-V5) zum Steuern des Verbrauchs der Verbraucher (50-54) unmittelbar ohne Vermittlung der jeweiligen Ortsnetzstation (20, 21) zu dem jeweiligen Verbraucher sendet.

**Claims**

1. Power transmission system (10) having at least two local grids (40, 41) which are each connected to loads (50-52, 53-55) and are connected to a higher-level power transmission network (30), **characterised in that**

  - the power transmission system (10) has at least one load control unit (60), which is connected directly or indirectly to at least one load (50-54) in each case of the at least two local grids (40, 41) and is suitable for controlling the consumption of said loads (50-54), and
  - moreover the load control unit (60) is suitable for evaluating the load state of the at least two local grids (40, 41) and, in the event of an overload which has occurred or is imminent on one of the at least two local grids (40), for reducing the consumption of at least one load (50, 51) of said local grid (40) and conversely for increasing the consumption of at least one load (53) in one of the other local grids (41), which is not overloaded, of the at least two local grids.

2. Power transmission system according to claim 1, **characterised in that** the at least two local grids (40, 41) are each connected to a secondary unit substation (20, 21) which connects the associated local grid (40, 41) to the higher-level power transmission network (30).

3. Power transmission system according to claim 1 or 2, **characterised in that** the at least one load control unit (60) is indirectly or directly connected to the secondary unit substations (20, 21) of the at least two local grids (40, 41).

4. Power transmission system according to claim 3, **characterised in that** the at least one load control unit (60) sends control signals (V1-V5) for controlling the consumption of the loads (50-54) indirectly via the respective secondary unit substation (20, 21) to the respective load.

5. Power transmission system according to one of the preceding claims 1 to 3, **characterised in that** the at least one load control unit (60) sends control signals (V1-V5) for controlling the consumption of the loads (50-54) directly without intervention of the respective secondary unit substation (20, 21) to the respective load.

6. Load control unit for a power transmission system according to one of the preceding claims, **characterised in that**

    - the load control unit (60) is suited to being indirectly or directly connected to at least one load (50-54) respectively of at least two local grids (40, 41) and to controlling the consumption of these loads, and
    - the load control unit (60) is also suitable for evaluating the load state of the at least two local grids (40, 41) and, in the event of an overload which has occurred or is imminent on one of the at least two local grids (40), for reducing the consumption of at least one load (50, 51) of this local grid (40), and conversely for increasing the consumption of at least one load (53) in one of the other local grids (41), which is not overloaded, of the at least two local grids.

7. Method for controlling a power transmission system (10) having secondary unit substations (20, 21) which are connected on the one hand to a higher-level transmission network (30) and on the other hand to loads (50-52, 53-55) by way of an associated local grid (40, 41) in each case, **characterised in that** the load state of at least two local grids (40, 41) is evaluated and in the event of an overload which has occurred or is imminent on one of the at least two local grids (40, 41) the consumption of at least one load (50, 51) of this local grid (40) is reduced and conversely the consumption of at least one load (53) in one of the other local grids (41), which is not overloaded, of the at least two local grids is increased.

8. Method according to claim 7, **characterised in that** a load control unit (60), which is indirectly or directly connected to the secondary unit substations (20, 21) of the at least two local grids (40, 41), evaluates the load state of the at least two local grids.

9. Method according to claim 8, **characterised in that** the load control unit (60) sends control signals (V1-V5) for controlling the consumption of the loads (50-54) indirectly via the respective secondary unit substation (20, 21) to the respective load.

10. Method according to claim 8, **characterised in that** the load control unit (60) sends control signals (V1-V5) for controlling the consumption of the loads (50-54) directly without intervention of the respective secondary unit substation (20, 21) to the respective load.

## Revendications

1. Système (10) de transport d'énergie, comprenant au moins deux réseaux (40, 41) locaux de ligne, qui sont reliés chacun à des consommateurs (50 à 52, 53 à 55) et qui sont en liaison avec un réseau (30) de transport d'énergie supérieur hiérarchiquement, **caractérisé en ce que**

    - le système (10) de transport d'énergie a au moins un dispositif (60) de commande de charge, qui est relié directement ou indirectement à au moins respectivement un consommateur (50 à 54) des au moins deux réseaux (40, 41) locaux de ligne et qui et propre à commander la consommation de ces consommateurs (50 à 54) et
    - le dispositif (60) de commande de charge est propre, en outre, à exploiter l'état de charge des au moins deux réseaux (40, 41) locaux de ligne et, dans le cas d'une surcharge apparue ou imminente des au moins deux réseaux (40) locaux de ligne, à réduire la consommation d'au moins un consommateur (50, 51) de ces réseaux (40) locaux de ligne et, en contrepartie, à augmenter la consommation d'au moins un consommateur (53) dans l'un des autres réseaux (41) locaux de ligne non surchargés des au moins deux réseaux locaux de ligne.

2. Système de transport d'énergie suivant la revendication 1,
**caractérisé en ce que**
les au moins deux réseaux (40, 41) locaux de ligne sont raccordés chacun à un poste (20, 21) de réseau sur site, qui raccorde le au moins un réseau (40, 41) local de ligne associé au réseau (30) de transport d'énergie supérieur hiérarchiquement.

3. Système de transport d'énergie suivant la revendication 1 ou 2,
**caractérisé en ce que**
le au moins un dispositif (60) de commande de charge est en liaison directement ou indirectement avec les postes (20, 21) de réseau sur site des au moins deux réseaux (40, 41) locaux de ligne.

4. Système de transport d'énergie suivant la revendication 3,
**caractérisé en ce que**
le au moins un dispositif (60) de commande de charge envoie au consommateur respectif, indirectement par le poste (20, 21) respectif de réseau sur site, des signaux (V1 à V5) de commande pour commander la consommation des consommateurs (50 à 54).

5. Système de transport d'énergie suivant l'une des revendications précédentes 1 à 3,
**caractérisé en ce que**
le au moins un dispositif (60) de commande de charge envoie au consommateur respectif, directement, sans intermédiation du poste (20, 21) de réseau sur site respectif, des signaux (V1 à V5) de commande pour commander la consommation des consommateurs (50 à 54).

6. Dispositif de commande de charge pour un système de transport d'énergie suivant l'une des revendications précédentes,
**caractérisé en ce que**

   - le dispositif (60) de commande de charge est propre à être relié directement ou indirectement à au moins respectivement un consommateur (50 à 54) d'au moins deux réseaux (40, 41) locaux de ligne et à commander la consommation de ces consommateurs et
   - le dispositif (60) de commande de charge est propre, en outre, à exploiter l'état de charge des au moins deux réseaux (40, 41) locaux de ligne et, dans le cas d'une surcharge apparue ou imminente de l'un des au moins deux réseaux (40) locaux de ligne, à réduire la consommation d'au moins un consommateur (50, 51) de ce réseau (40) local de ligne et, en contrepartie, à augmenter la consommation au moins d'un consommateur (53) dans l'un des autres réseaux (41) locaux de ligne non surchargés des au moins deux réseaux locaux de ligne.

7. Procédé de commande d'un système (11) de transport d'énergie ayant des postes (20, 21) de réseau sur site, qui sont raccordés d'une part à un réseau (30) de transport d'énergie supérieur hiérarchiquement et d'autre part chacun par un réseau (40, 41) local de ligne associé à des consommateurs (50 à 52, 53 à 55),
**caractérisé en ce que**
on exploite l'état de charge d'au moins deux réseaux (40, 41) locaux de ligne et, dans le cas d'une surcharge apparue ou imminente de l'un des au moins deux réseaux (40, 41) locaux de ligne, on réduit au moins la consommation d'un consommateur (50, 51) de ce réseau (40) local de ligne et, en contrepartie, on augmente la consommation d'au moins un consommateur (53) dans l'un des autres réseaux (41) locaux de ligne non surchargés des au moins deux réseaux locaux de ligne.

8. Procédé suivant la revendication 7,
**caractérisé en ce que**
un dispositif (60) de commande de charge, qui est en liaison directement ou indirectement avec les postes (20, 21) de réseau sur site des au moins deux réseaux (40, 41) locaux de ligne, exploite l'état de charge des au moins deux réseaux locaux de ligne.

9. Procédé suivant la revendication 8,
**caractérisé en ce que**
le dispositif (60) de commande de charge envoie au consommateur respectif, indirectement par le poste (20, 21) respectif de réseau sur site, des signaux (V1 à V5) de commande pour commander la consommation des consommateurs (50 à 54).

10. Procédé suivant la revendication 8,
**caractérisé en ce que**
le dispositif (60) de commande de charge envoie au consommateur respectif, directement sans intermédiaire du poste (20, 21) respectif de réseau sur site, des signaux (V1 à V5) de commande pour commander la consommation des consommateurs (50 à 54).

FIG 1

EP 2 652 854 B1

FIG 2

FIG 3

FIG 4

EP 2 652 854 B1

EP 2 652 854 B1

FIG 5

FIG 6

EP 2 652 854 B1

FIG 7

EP 2 652 854 B1

**IN DER BESCHREIBUNG AUFGEFÜHRTE DOKUMENTE**

**In der Beschreibung aufgeführte Patentdokumente**

- WO 2009104166 A